# FASCICULE DE BREVET EUROPEEN

(11) **EP 2 531 763 B1**
(45) Date de publication et mention de la délivrance du brevet: **20.04.2016**
(21) Numéro de dépôt: 11706890.8
(22) Date de dépôt: 31.01.2011
(51) Int. Cl.: F16L 11/15, F16L 59/14, F16L 11/115, F16L 59/153, F16L 11/18

(54) **CONDUITE FLEXIBLE DE TRANSPORT D'UN FLUIDE CRYOGÉNIQUE ET PROCÉDÉ DE FABRICATION ASSOCIÉ**
FLEXIBLE RÖHRE ZUR FÖRDERUNG EINER KRYOGENEN FLÜSSIGKEIT UND VERFAHREN ZU IHRER HERSTELLUNG
FLEXIBLE PIPE FOR CONVEYING A CRYOGENIC FLUID AND ASSOCIATED PRODUCTION METHOD

(30) Priorité: 01.02.2010 FR 1050665
(43) Date de publication de la demande: 12.12.2012
(73) Titulaire: Technip France, 92400 Courbevoie (FR)
(72) Inventeur: BIAGGI, Jean-Pascal, F-78170 La Celle Saint Cloud (FR); ESPINASSE, Philippe, F-76420 Bihorel (FR)
(74) Mandataire: Blot, Philippe Robert Emile
(86) Numéro de dépôt international: PCT/FR2011/050185
(87) Numéro de publication internationale: WO 2011/092440

(56) Documents cités:
- WO-A1-2007/026168
- GB-A- 2 051 297
- US-A- 1 145 434
- US-A- 2 256 386
- US-A- 2 599 210
- US-A- 4 204 562

## Description

La présente invention concerne une conduite flexible de transport d'un fluide cryogénique, selon le préambule de la revendication 1.

GB 2 051 297 décrit une conduite du type précité.

Une telle conduite est destinée à transporter un fluide cryogénique issu par exemple d'un procédé de liquéfaction de gaz. Le fluide transporté est par exemple du gaz naturel liquéfié présentant une température d'ébullition inférieure à 163 °C.

Plus généralement, un fluide cryogénique transporté par la conduite présente une température d'ébullition inférieure à 0°C.

Le gaz naturel extrait du sol constitue une source importante de combustible pouvant être valorisé.

Pour transporter le gaz naturel sous forme gazeuse depuis son lieu de production vers son lieu d'exploitation, il est connu d'utiliser des pipelines. Toutefois, dans de nombreux cas, notamment lorsque le lieu de production est situé dans une étendue d'eau, il est plus simple et plus économique de transporter le gaz naturel sous forme liquide, afin de diminuer son volume pendant le transport et de faciliter son stockage et sa manipulation.

Toutefois, la manipulation de fluides cryogéniques, et notamment le déchargement du fluide cryogénique depuis une usine de liquéfaction vers un navire de transport, ou depuis un navire de transport vers une installation de stockage à terre doit être effectué au voisinage du littoral, souvent par le moyen de bras articulés de connexion raccordant le navire à l'usine ou à l'installation de stockage.

De tels bras articulés ne sont pas adaptés dans le cas où les opérations de chargement ou de déchargement sont effectuées loin de la côte, dans des zones peu protégées, notamment lorsque les unités de liquéfaction sont situées sur des installations flottantes du type « FLNG » .

Dans ce cas, le déchargement du gaz liquéfié ne peut être effectué que lorsque les conditions météorologiques sont calmes, ce qui peut rendre l'exploitation difficile.

En outre, les conduites flexibles de type liée ou non liée connues pour le déchargement de fluides hydrocarbonés à température ambiante ne sont pas aptes à transporter des fluides cryogéniques à des températures inférieures à -40°C/-50°C, compte tenu des températures très basses des fluides cryogéniques et de leurs propriétés particulières.

Pour pallier ce problème, EP 1 945 983 décrit une conduite flexible prévue pour le transport de fluide cryogénique.

Une telle conduite comprend un tube interne agrafé non étanche offrant une résistance à la pression externe. Cette conduite comprend de l'intérieur vers l'extérieur une carcasse interne destinée à résister à la pression externe, une couche imperméable constituée d'un film polymérique fin en contact direct avec la carcasse, une couche d'isolant et une gaine plastique résistant aux basses températures. La couche d'isolant permet de créer un gradient thermique suffisant pour être recouvert de la gaine plastique. Le tube interne agrafé est recouvert par un isolant et renforcé extérieurement par une voûte de pression et des couches d'armures de traction.

Pour assurer une bonne isolation thermique et éviter que le fluide cryogénique se réchauffe ou que de la glace se forme à l'extérieur de la conduite flexible, des couches d'isolant thermique sont prévues autour des couches d'armures de traction pour maintenir la surface de contact de la conduite flexible avec l'eau à une température suffisamment élevée pour éviter la formation de glace.

Cependant une telle structure ne donne pas entière satisfaction du fait de la complexité de sa structure interne.

Une conduite flexible de la Demanderesse pour le transport de fluide cryogénique est décrite dans « LNG Transfer - Cryogenic flexible pipe for transfer - May-June 2000». Cette conduite flexible comprend,de l'intérieur vers l'extérieur, un tuyau ondulé propre à assurer l'étanchéité au fluide cryogénique et la résistance à la pression interne, des couches d'armures de traction propres à supporter les charges axiales appliquées sur la conduite et un ensemble de couches d'isolation thermique.

Toutefois, de telles conduites flexibles ne donnent pas entière satisfaction en ce qui concerne la perte de charge du fluide circulant dans la conduite. Ces conduites ne sont donc utilisables en pratique que sur une longueur relativement faible, ce qui peut rendre difficile son utilisation industrielle.

Un but de l'invention est d'obtenir une conduite flexible de transport qui soit adaptée pour le transport de fluides cryogéniques et qui présente néanmoins une longueur suffisante pour être industrialisée sans nuire au transport du fluide présent dans la conduite.

A cet effet, l'invention a pour objet une conduite selon la revendication 1.

La conduite selon l'invention peut comprendre l'une ou plusieurs des caractéristiques des revendications 2 à 10, ou l'une des caractéristiques suivantes, prises isolément ou suivant toutes combinaisons techniquement possibles :
- les segments cylindriques adjacents de la gaine sont montés coulissants l'un par rapport à l'autre le long de l'axe ;
- les segments cylindriques sont disjoints ;
- chaque segment est propre à être déplacé par rapport aux autres segments totalement à l'écart des autres segments, sans rupture mécanique du segment.

L'invention a également pour objet un procédé selon la revendication 11.

L'invention sera mieux comprise à la lecture de la description qui va suivre, donnée uniquement à titre d'exemple, et faite en se référant aux dessins annexés, sur lesquels :
- la figure 1 est une vue partielle d'une demi-section de la paroi d'une première conduite flexible selon l'invention ;
- la figure 2 est une vue en bout d'un segment cylindrique de la gaine interne de la conduite de la figure 1 ;
- la figure 3 est une vue analogue à la figure 2 d'une variante de segment cylindrique ;
- la figure 4 est une vue partielle en coupe suivant un plan axial médian d'un segment d'une variante de conduite selon l'invention ;
- la figure 5 est une vue de côté d'une section de tube ondulé et d'une gaine interne d'une deuxième conduite selon l'invention ;
- la figure 6 est une vue en coupe prise suivant un plan axial médian de la section représentée sur la figure 5 ;
- la figure 7 est une vue d'un détail marqué VII de la figure 6.

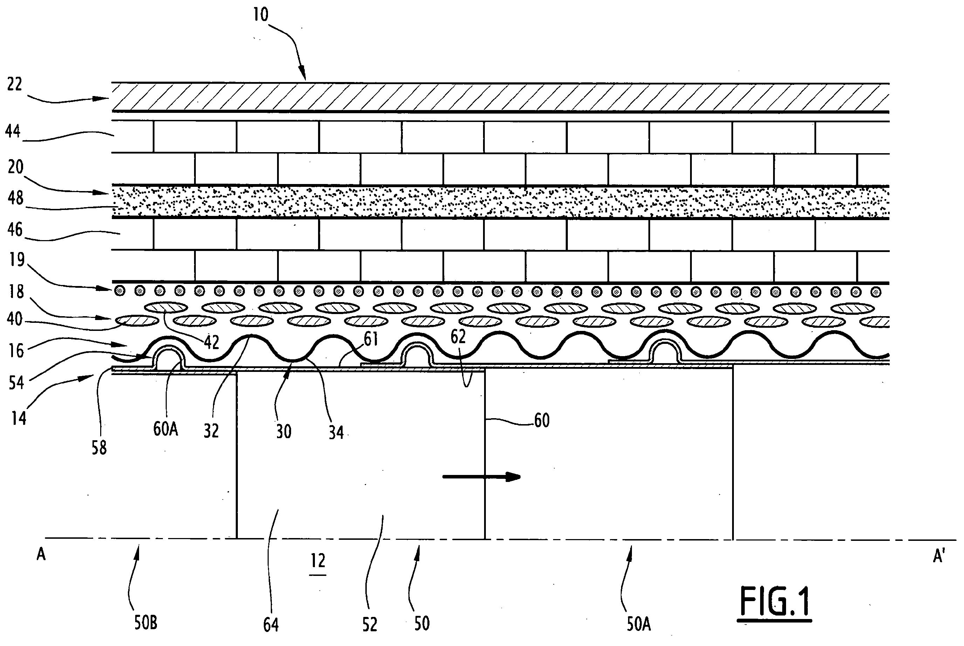

Une première conduite cryogénique 10 selon l'invention est représentée partiellement en section suivant un plan axial médian sur la figure 1.

Cette conduite 10 est destinée à transporter un fluide cryogénique tel qu'un gaz liquéfié, avantageusement du gaz naturel liquéfié, entre son extrémité amont et son extrémité aval.

La conduite 10 s'étend ainsi sur une longueur supérieure à 30 mètres et comprise notamment entre 50 mètres et 300 mètres. Elle délimite un passage central 12 de circulation du fluide cryogénique, d'axe local A-A'.

Une telle conduite flexible a un rayon minimal de courbure en flexion sans endommagement (« MBR » ou « minimal bending radius » en anglais) relativement petit, par exemple de quelques mètres, ce qui la rend propre à être enroulée et déroulée de manière réversible sans déformation plastique significative sur un tambour ou un panier porté par un navire.

La conduite 10, selon l'invention, comprend, depuis son axe A-A' vers l'extérieur, une gaine interne 14 de guidage du fluide, un tuyau ondulé 16, propre à assurer l'étanchéité au fluide et la résistance à la pression interne, et des couches 18 d'armures de traction propres à supporter les charges axiales appliquées sur la conduite10.

La conduite 10 comprend en outre une couche spiralée 19 optionnelle de maintien des couches d'armures 18, un ensemble 20 de couches d'isolation thermique propres à maintenir la température à l'extérieur de la conduite supérieure à 0 °C, et une couche externe optionnelle 22 d'étanchéité, évitant la pénétration d'eau et assurant éventuellement une isolation thermique additionnelle.

Le tube interne ondulé 16 est formé à base de métal. Pour assurer une bonne tenue en température, à la température de circulation du fluide cryogénique, ce tube est par exemple réalisé en acier 304L ou 316L.

Le tube 16 présente avantageusement un diamètre moyen supérieur à 30 centimètres par exemple compris entre 30 centimètres et 60 centimètres.

Il présente, en se déplaçant axialement parallèlement à l'axe A-A' une pluralité d'ondulations 30 de pas inférieur à au moins dix fois le diamètre moyen du tube 16.

Les ondulations 30 de la conduite sont formées par une série de creux 32 et de bosses 34 délimitant axialement les creux 32.

Les creux 32 débouchent radialement vers l'axe A-A'. La profondeur radiale maximale des creux 32, prise perpendiculairement à l'axe A-A' entre le sommet d'une bosse 34 et le fond du creux 32, est inférieure à vingt fois le diamètre moyen du tube 16.

Dans l'exemple représenté sur la figure 1, les creux 32 forment une série de gorges annulaires disjointes parallèles les unes aux autres. En variante, les creux 32 sont formés par une gorge hélicoïdale continue de pas égal au pas des ondulations 30.

Le tube 16 est formé par exemple par assemblage bout à bout d'une pluralité de sections de tube ondulé, chaque section étant formée par exemple par emboutissage. Chaque section de tube ondulé comporte une pluralité d'ondulations, par exemple plus de dix ondulations 30. Chaque section de tube ondulé définit une surface intérieure continue et étanche sur toute sa longueur et sur toute sa périphérie.

Une fois assemblées entre elles par exemple par soudage, les sections de tube ondulé 16 forment un conduit étanche continu sur toute sa longueur.

En variante, le tube 16 est formé par enroulement d'un ruban replié suivant au moins un bord pour s'agrafer sur un bord adjacent du ruban.

Le tube 16 offre ainsi une résistance à la pression interne, tout en garantissant une certaine flexibilité, par la déformation offerte par les ondulations 30 du tube 16, notamment aux basses températures d'utilisation.

Les couches 18 d'armures de traction sont formées par un enroulement hélicoïdal croisé de fibres, par exemple en matériau synthétique tel que du polyester, ou en métal. Ainsi, une première couche 40 d'armures est par exemple enroulée en hélice autour de l'axe A-A' avec un angle d'hélice +α compris entre 20 ° et 45° par rapport à l'axe A-A'. Une deuxième couche 42 d'armure est enroulée, par exemple avec un angle d'hélice -α à l'extérieur de la première couche 40 au contact de cette couche 40.

Les couches d'armures 18 présentent avantageusement une épaisseur comprise entre 1 mm et 4 mm. Elles ne sont pas liées au tube ondulé 16.

La couche optionnelle spiralée 19 est enroulée autour des couches d'armures 40, 42, avec un angle d'enroulement inférieur à celui des couches d'armure. Ainsi, l'angle d'enroulement est par exemple compris entre 2 ° et 5 °.

La couche spiralée 19 est réalisée à base d'un élément filiforme, par exemple à base de fibres de matière plastique telles que des fibres de polyester.

La couche spiralée 19 assure le renforcement des couches d'armures 18 et évite que la structure de ces couches 18 ne se désorganise lors de l'utilisation de la conduite ou lors de sa flexion.

La couche spiralée 19 n'est pas liée aux couches d'armures 18.

Dans cet exemple, l'ensemble d'isolation thermique 20 est formé par deux couches d'isolation 44, 46 analogues séparées par une couche intermédiaire d'étanchéité 48.

Les couches d'isolation 44, 46 sont formées de matériau solide isolant thermiquement présentant une conductivité thermique inférieure à au moins 300 fois la conductivité thermique du tube interne 16.

Les couches 44, 46 sont par exemple formées par une mousse, avantageusement une mousse de polyoléfine, ou par un aérogel.

Dans l'exemple représenté sur la Figure 1, les couches 44, 46 d'isolant sont formés par exemples par des rubans de mousse de polyéthylène enroulés autour de l'axe A-A'.

La couche intermédiaire d'étanchéité 48 est formée avantageusement d'une bande adhésive de mastic caoutchouc. Elle assure une étanchéité additionnelle au gaz naturel dans le cas où le tube interne 16 n'assure plus cette étanchéité.

L'ensemble d'étanchéité 20 présente une épaisseur supérieure à l'épaisseur du tube interne 16, par exemple comprise entre 3 cm et 15 cm.

Son coefficient d'isolation thermique global assure que la température interne dans le passage 12 est conservée à une valeur inférieure ou sensiblement égale à la température d'ébullition du fluide cryogénique, tout en évitant la formation de glace à l'extérieur de la conduite 10.

L'ensemble d'étanchéité 20 n'est pas lié à la couche spiralée 19 ou à la couche d'armure 18.

La couche externe 22 est destinée à assurer une étanchéité générale entre l'extérieur de la conduite 10 et l'intérieur de la conduite 10, pour empêcher la pénétration d'eau dans la conduite 10. Elle est formée par exemple de bandes spiralées en PVC caoutchouc ou en aramide tel que du KEVLAR ou d'une gaine thermoplastique extrudée ou projetée.

Avantageusement, la couche externe 22 comprend en outre une sous couche additionnelle d'isolant thermique.

La couche externe 22 n'est pas liée à l'ensemble d'étanchéité 20.

Selon l'invention, la gaine interne 14 est formée par une série de segments cylindriques 50 engagés axialement les uns dans les autres à l'intérieur du tube ondulé 16.

La gaine interne 14 est de longueur totale sensiblement égale à la longueur totale du tube ondulé 16.

Chaque segment 50 est de forme générale cylindrique. Il comporte un corps cylindrique 52 d'axe A-A' expansible radialement, et une butée 54 extérieure de calage axial sur le tube ondulé 16.

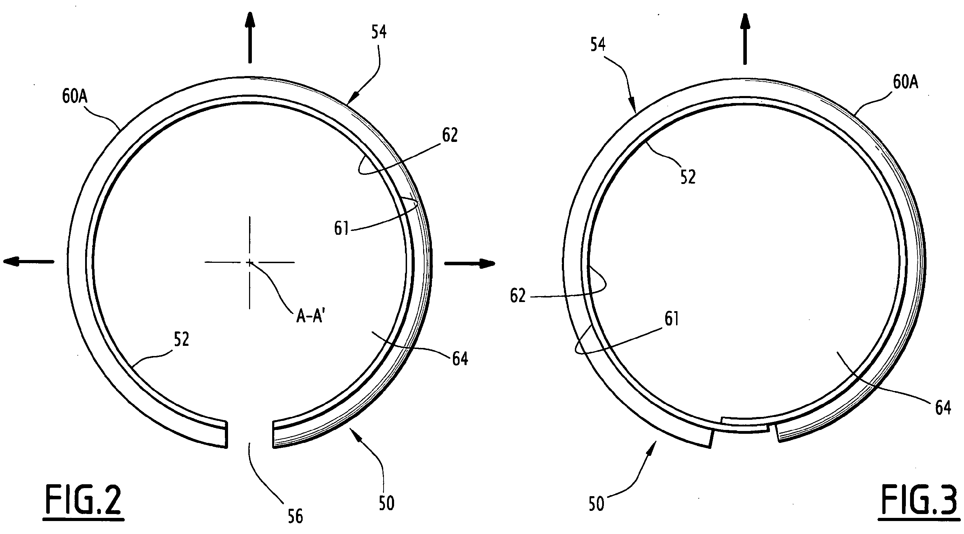

Comme illustré par la figure 2, le corps 52 délimite une fente longitudinale 56 s'étendant entre un bord amont 58 et un bord aval 60 du corps 52 sur toute sa longueur.

La longueur de chaque segment cylindrique 50, prise entre le bord amont 58 et le bord aval 60 est supérieur à au moins deux fois le pas des ondulations 30. Ainsi, chaque segment couvre une pluralité d'ondulations 30 lorsqu'il est placé dans le tube ondulé 16.

La butée 54 est réalisée d'un seul tenant en étant venue de matière avec le corps cylindrique 52. Elle est formée par exemple par emboutissage ou roulage. Dans l'exemple représentée sur la figure 2, la butée 54 forme un bourrelet 60A sensiblement annulaire s'étendant sur un angle d'au moins 90°, avantageusement d'au moins 180° suivant une circonférence autour de l'axe A-A'.

La butée 54 présente une étendue axiale, prise le long de l'axe A-A', inférieure à l'étendue axiale du creux 32 d'une ondulation 30 pour pouvoir être reçue dans ce creux 32. Ainsi, chaque segment 50 est déplaçable axialement par rapport au tube ondulé 16 sur une course axiale donnée inférieure au pas des ondulations, définie par la course axiale de la butée 54 dans le creux 32.

En outre, la butée 54 présente une étendue radiale, prise à partir d'une surface externe 61 cylindrique du corps 52, inférieure à la profondeur maximale du creux 32 dans laquelle elle est reçue.

A l'écart de la butée 54, la surface interne 62 et la surface externe 61 du corps cylindrique 52 sont sensiblement dépourvues d'aspérités, c'est-à-dire qu'elles ne comprennent pas de relief d'étendue radiale supérieure à 10% de l'épaisseur moyenne du corps 52, prise entre la surface interne 62 et la surface externe 61.

L'épaisseur moyenne du corps cylindrique 52, prise entre les surfaces 61 et 62 est notamment inférieure à 2% du diamètre intérieur du tube 16.

Comme illustré partiellement par la figure 2, chaque section cylindrique 50 est contractable radialement entre une position de repos expansée, représentée sur la figure 2, dans laquelle le diamètre intérieur délimité par le corps cylindrique 52 est supérieur au diamètre minimal du tube 16, et une position contractée radialement vers l'axe A-A' lorsque le segment cylindrique 50 est reçu dans le tube ondulé 16.

Dans la position contractée, les bords latéraux de la fente 56 sont au contact l'un de l'autre ou se recouvrent partiellement comme illustré dans la variante représentée sur la Figure 3. La fente 56 est obturée et le canal intérieur 64 délimité par la surface interne 62 débouche exclusivement par le bord amont 58 et par le bord aval 60 du corps cylindrique 52.

Lorsque la gaine interne 14 est montée dans le tube ondulé 16, les segments 50 adjacents sont partiellement insérés les uns dans les autres.

Ainsi, le bord aval 60 de chaque segment 50 est reçu à coulissement dans le canal intérieur 64 d'un segment aval 50A adjacent. Le segment cylindrique 50 couvre ainsi radialement vers l'axe A-A' la butée 54 du segment cylindrique aval 50A.

De même, le segment amont 50B adjacent au segment 50 est reçu partiellement à coulissement dans le canal intérieur 64 du segment 50. Une partie aval du segment 50B couvre la butée 54 du segment 50 vers l'axe A-A'.

Ainsi, le passage 12 est délimité par les surfaces internes 62 sensiblement dépourvues d'aspérités des segments successifs 50, ce qui assure une résistance minimale à l'écoulement du fluide cryogénique de l'amont vers l'aval, de gauche à droite sur la figure 1.

En particulier, la gaine 14 ne présente aucune surface transversale dirigée vers l'amont dans le passage 12, notamment au voisinage de la surface interne 62 de chaque segment 50.

Ceci permet d'augmenter la longueur de la conduite 10 et d'assurer un transport efficace du fluide cryogénique avec une perte de charge minimale.

La gaine interne 14 reste déformable en flexion par coulissement relatif des sections cylindrique 50 les unes par rapport aux autres.

En outre, chaque butée 54 d'un segment cylindrique 50 est reçue dans un creux 32 d'une ondulation 30, ce qui assure un calage axial le long de l'axe A-A' par coopération avec les bosses 34 adjacentes au creux 32.

Ainsi, chaque segment cylindrique 50 est retenu axialement par le tube ondulé 16 à l'encontre du flux de fluide cryogénique, et lors des déformations éventuelles de la conduite 10 en traction ou en flexion.

Un procédé d'assemblage d'une conduite 10 selon l'invention va maintenant être décrit.

Initialement, les différentes sections de tube ondulé 16 sont fournies. Chaque section de tube 16 est alors munie d'une partie des segments 50 de la gaine interne 14, avant sa soudure avec une autre section.

A cet effet, les segments cylindriques 50 sont passés successivement de leurs configurations expansées à leurs configurations rétractées. Ils sont successivement introduits dans chaque section de tube interne 16 jusqu'à leur position axiale souhaitée, en partant du segment 50 situé le plus en aval dans la section de tube 16.

Lorsque chaque segment 50 atteint sa position souhaitée, il s'applique par expansion radiale élastique sur le tube ondulé 14. Chaque butée 54 d'un segment 50 est alors logée dans un creux 32 d'une ondulation 30 et le bord aval 60 de chaque segment 50 est inséré à travers le bord amont 58 du segment adjacent 50A pour recouvrir la butée 54 du segment adjacent 50A.

Puis, les différentes sections de tube ondulé 16 sont assemblées les unes aux autres par exemple par soudage.

Une fois l'assemblage réalisé, les segments 50 situés aux extrémités de chaque section de tube interne 16 sont alors placés dans le tube interne continu pour achever la réalisation de la gaine 14 interne.

Ceci étant fait, les couches d'armures 18 sont enroulées autour du tube interne 16 de manière connue. Puis, la couche spiralée 19 est optionnellement enroulée en spirale autour des couches d'armures 18.

Ensuite, la première couche d'isolation 46, la couche intermédiaire 48, puis la deuxième couche d'isolation 44 sont formées et disposées autour des couches d'armures 18.

Enfin, la couche externe d'étanchéité 22 est disposée autour de l'ensemble d'étanchéité 20.

Dans une variante de procédé, le tube interne 16 est assemblé dans son ensemble avant que les segments cylindriques 50 ne soient introduits dans le tube 16 pour former la gaine 14.

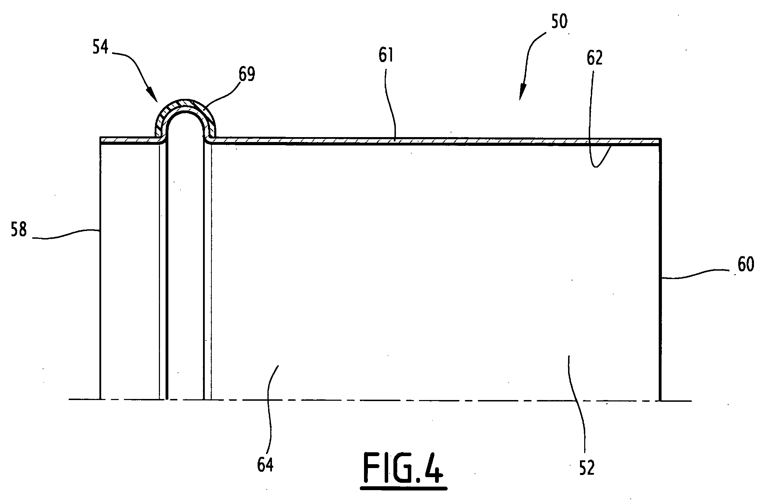

Dans une variante représentée sur la figure 4, la butée 54 ou l'ensemble 50 comprend un gainage extérieur 69 en plastique propre à réduire la friction avec le tube ondulé 16. Le gainage 69 est par exemple formé par une couche de nylon appliquée à l'extérieur du bourrelet 60A.

Dans d'autres variantes, la couche spiralée 19 et éventuellement la couche externes 22 sont omises.

Dans d'autres variantes encore, les butées 54 s'étendent uniquement sur une partie de la circonférence de la surface extérieure 61 par exemple sur un angle inférieur à 90°.

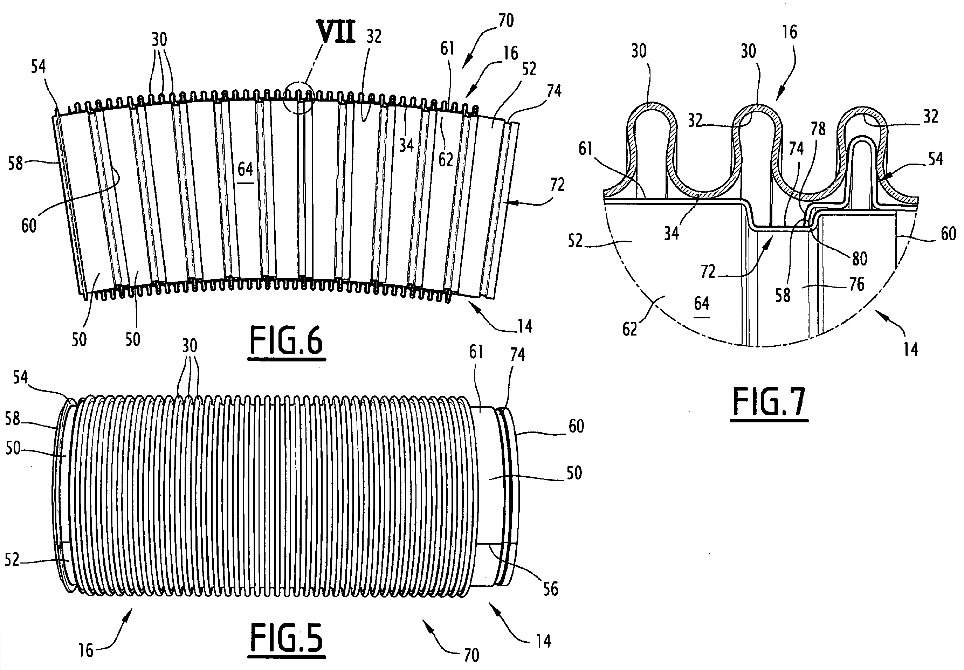

Une section de tube ondulé 16 et de gaine interne 14 d'une deuxième conduite 70 flexible selon l'invention est représentée sur les figures 5 à 7.

La deuxième conduite 70 flexible selon l'invention diffère de la première conduite 10 en ce que le corps cylindrique 52 de chaque segment 50 présente, au voisinage de son bord aval 60 un étranglement annulaire périphérique 72. L'étranglement annulaire périphérique 72 définit une gorge 74 annulaire dans la surface externe 61 et une saillie périphérique 76 dans le canal intérieur 64.

A l'écart de la saillie 76, la surface interne reste sensiblement dépourvue d'aspérités.

A la différence de la première conduite 10, le bord amont 58 présente un rebord périphérique de retenue 78 qui fait saillie radialement vers l'axe A-A' sur une étendue transversale sensiblement égale à la profondeur de la gorge 74.

Le rebord 78 est reçu dans la gorge 74 et bute contre un épaulement amont 80 défini par la gorge pour retenir axialement chaque segment 50 aval par rapport au segment amont 50 adjacent.

Les segments 50 adjacents restent coulissants l'un par rapport à l'autre sur une course longitudinale sensiblement égale à la largeur de la gorge 74 prise le long de l'axe A-A'.

Dans cet exemple, le tube 16 présente avantageusement des creux 32 de profondeur au moins égale au pas des ondulations 30 pour recevoir chaque butée 54.

L'étendue radiale de chaque butée 64 est par ailleurs sensiblement égale à la profondeur du creux 32.

II résulte directement de la description ci-dessus que les segments 50 sont disjoints. Ainsi, chaque segment cylindrique 50 est propre à être déplacé par rapport aux autres segments cylindriques 50, totalement à l'écart des autres segments cylindriques 50, sans rupture mécanique du segment 50.

Chaque segment 50 est ainsi formé par une paroi cylindrique délimitée axialement par un bord amont 58 et par un bord aval 60, les bords amont et aval 58, 60 s'étendant avantageusement dans un plan perpendiculaire à l'axe de la paroi cylindrique.

## Revendications

1. Conduite flexible (10; 70) de transport d'un fluide cryogénique, comprenant :
- un tube intérieur (16) ondulé d'axe (A-A') définissant une pluralité d'ondulations (30) débouchant radialement vers l'axe (A-A') ;
- au moins une couche (18) d'armures de traction, disposée autour du tube ondulé (16) ;
- et au moins une couche (44, 46) d'isolation thermique disposée autour de la couche d'armures (18) ;
dans laquelle la conduite (10) comprend une gaine interne (14) de guidage de l'écoulement du fluide cryogénique disposée dans le tube ondulé (16),
**caractérisée en ce que** la gaine interne (14) est formée d'une pluralité de segments cylindriques (50),
chaque segment cylindrique (50) de la gaine interne (14) recouvrant une pluralité d'ondulations (30) successives du tube ondulé (16) et comprenant une butée extérieure (54) de calage axial reçue dans une ondulation (30) du tube ondulé (16),
et **en ce que** chaque segment cylindrique (50) est déplaçable axialement par rapport au tube ondulé (16) sur une course axiale donnée inférieure aux pas des ondulations (30) du tube intérieur ondulé (16), la course étant définie par la course axiale de la butée de calage (54) dans un creux d'une ondulation (30).

2. Conduite flexible (10) selon la revendication 1, **caractérisée en ce que** chaque segment cylindrique (50) définit une surface cylindrique intérieure (62) dépourvue d'aspérités à l'écart axialement de la butée extérieure (54).

3. Conduite flexible (10 ; 70) selon l'une des revendications 1 ou 2, **caractérisée en ce que** chaque segment cylindrique (50) présente un bord aval (60) engagé à travers un bord amont (58) d'un segment cylindrique (50A) adjacent.

4. Conduite flexible (10; 70) selon l'une quelconque des revendications précédentes, **caractérisée en ce que** chaque butée extérieure (54) s'étend angulairement sur un angle supérieur à 90°, avantageusement supérieur à 180° autour de l'axe (A-A').

5. Conduite flexible (10 ; 70) selon l'une quelconque des revendications précédentes, **caractérisée en ce que** chaque segment cylindrique (50) comprend un corps cylindrique (52) venu de matière avec la butée extérieure (54), la butée extérieure (54) étant formée par déformation locale du corps cylindrique (52).

6. Conduite flexible (10; 70) selon l'une quelconque des revendications précédentes, **caractérisée en ce que** la butée extérieure (54) de chaque segment cylindrique (50) s'étend axialement en regard d'une partie d'un segment cylindrique (50A) adjacent.

7. Conduite flexible (10; 70) selon l'une quelconque des revendications précédentes, **caractérisée en ce que** la surface extérieure de chaque butée extérieure (54) est revêtue d'un gainage (69) en matière plastique destiné à entrer en contact avec le tuyau ondulé (16).

8. Conduite flexible (10; 70) selon l'une quelconque des revendications précédentes, **caractérisée en ce que** chaque segment cylindrique (50) est déformable élastiquement vers l'axe (A-A') entre une configuration de repos expansée radialement et une configuration contractée radialement, chaque segment cylindrique (50) occupant sa configuration contractée radialement lorsqu'il est inséré dans le tuyau ondulé (16).

9. Conduite flexible (10; 70) selon l'une quelconque des revendications précédentes, **caractérisée en ce que** chaque segment cylindrique (50) est fendu le long d'une génératrice sur toute sa longueur.

10. Conduite flexible (10; 70) selon l'une quelconque des revendications précédentes, **caractérisée en ce qu'**elle comprend une couche spiralée (19) de maintien de la couche (18) d'armures de traction, la couche spiralée (19) étant interposée entre la couche d'armures (18) et la couche (44, 46) d'isolation thermique.

11. Procédé de fabrication d'une conduite flexible (10 ; 70) de transport de fluide cryogénique selon l'une quelconque des revendications précédent, comprenant les étapes suivantes :
- fourniture d'un tube intérieur ondulé (16) d'axe (A-A') définissant une pluralité d'ondulations (30) débouchant radialement vers l'axe (A-A') ;
- disposition d'au moins une couche (18) d'armures de traction autour du tube ondulé (16) ;
- placement d'au moins une couche (44, 46) d'isolation thermique autour de la couche d'armures (18) ;
le procédé comprenant une étape de disposition d'une gaine interne (14) de guidage de l'écoulement du fluide cryogénique dans le tube ondulé (16), la gaine interne (14) étant formée à partir d'une pluralité de segments cylindriques (50),
chaque segment cylindrique (50) de la gaine interne (14) recouvrant une pluralité d'ondulations (30) successives du tube ondulé (16) et comprenant une butée extérieure (54) de calage axial reçue dans une ondulation (30) du tube ondulé (16), chaque segment cylindrique (50) étant déplaçable axialement par rapport au tube ondulé (16) sur une course axiale donnée inférieure aux pas des ondulations (30) du tube intérieur ondulé (16), la course étant définie par la course axiale de la butée de calage (54) dans un creux d'une ondulation (30).

## Patentansprüche

1. Flexible Leitung (10; 70) zum Transport eines Kryogen-Fluids, aufweisend:
- ein inneres, gewelltes Rohr (16) mit einer Achse (A-A'), definierend eine Mehrzahl von Wellen (30), die radial zur Achse (A-A') hin ausmünden,
- wenigstens eine Zugverstärkungsschicht (18), die um das gewellte Rohr (16) angeordnet ist,
- und wenigstens eine Schicht (44, 46) zur thermischen Isolation, die um die Verstärkungsschicht (18) angeordnet ist, wobei die Leitung (10) eine innere Hülle (14) zur Führung der Strömung des Kryogen-Fluids aufweist, die in dem gewellten Rohr (16) angeordnet ist,
**dadurch gekennzeichnet, dass** die innere Hülle (14) von einer Mehrzahl von zylindrischen Segmenten (50) gebildet ist,
wobei jedes zylindrische Segment (50) der inneren Hülle (14) eine Mehrzahl von sukzessiven Wellen (30) des gewellten Rohrs (16) abdeckt und aufweist einen äußeren, axialen Festhalte-Anschlag (54), der in einer Welle (30) des gewellten Rohrs (16) aufgenommen ist,
und dass jedes zylindrische Segment (50) axial verlagerbar ist bezüglich des gewellten Rohrs (16) über einen gegebenen axialen Weg, der kleiner ist als die Teilungen der Wellen (30) des inneren, gewellten Rohrs (16), wobei der Weg definiert ist von dem axialen Weg des Festhalte-Anschlags (54) in einem Hohlraum einer Welle (30).

2. Flexible Leitung (10) gemäß Anspruch 1, **dadurch gekennzeichnet, dass** jedes zylindrische Element (50) eine innere zylindrische Fläche (62) definiert, die im axialen Abstand von dem äußeren Anschlag (54) mit Unebenheiten versehen ist.

3. Flexible Leitung (10; 70) gemäß einem der Ansprüche 1 oder 2, **dadurch gekennzeichnet, dass** jedes zylindrische Element (50) einen Stromabwärts-Rand (60) hat, der mit einem Stromaufwärts-Rand (58) eines benachbarten zylindrischen Segments (50A) im Quereingriff ist.

4. Flexible Leitung (10; 70) gemäß irgendeinem der vorhergehenden Ansprüche, **dadurch gekennzeichnet, dass** jeder äußere Anschlag (54) sich um die Achse (A-A') winkelerstreckt über einen Winkel größer als 90°, vorteilhafterweise größer als 180°.

5. Flexible Leitung (10; 70) gemäß irgendeinem der vorhergehenden Ansprüche, **dadurch gekennzeichnet, dass** jedes zylindrische Element (50) einen zylindrischen Körper (52) aufweist, der stofflich einstückig mit dem äußeren Anschlag (54) ist, wobei der äußere Anschlag (54) gebildet ist durch lokale Deformation des zylindrischen Körpers (52).

6. Flexible Leitung (10; 70) gemäß irgendeinem der vorhergehenden Ansprüche, **dadurch gekennzeichnet, dass** der äußere Anschlag (54) jedes zylindrischen Elements (50) sich axial erstreckt gegenüber einem Teil eines benachbarten zylindrischen Segments (50A).

7. Flexible Leitung (10; 70) gemäß irgendeinem der vorhergehenden Ansprüche, **dadurch gekennzeichnet, dass** die äußere Fläche jedes äußeren Anschlags (54) mit einem Mantel (69) aus Kunststoffmaterial beschichtet ist, der dazu bestimmt ist, in Kontakt mit der gewellten Rohrleitung (16) zu treten.

8. Flexible Leitung (10; 70) gemäß irgendeinem der vorhergehenden Ansprüche, **dadurch gekennzeichnet, dass** jedes zylindrische Segment (50) elastisch deformierbar ist zu der Achse (A-A') hin zwischen einer Ruhe-Konfiguration radialer Entspannung und einer Radial-Kontraktions-Konfiguration, wobei jedes zylindrische Segment (50) seine Radial-Kontraktions-Konfiguration einnimmt, wenn es in die gewellte Rohrleitung (16) eingesetzt ist.

9. Flexible Leitung (10; 70) gemäß irgendeinem der vorhergehenden Ansprüche, **dadurch gekennzeichnet, dass** jedes zylindrische Segment (50) entlang einer Mantellinie über seine gesamte Länge geschlitzt ist.

10. Flexible Leitung (10; 70) gemäß irgendeinem der vorhergehenden Ansprüche, **dadurch gekennzeichnet, dass** es eine wendelförmige Schicht (19) zum Halten der Zugverstärkungsschicht (18) aufweist, wobei die wendelförmige Schicht (19) zwischen der Verstärkungsschicht (18) und der thermischen Isolationsschicht (44, 46) angeordnet ist.

11. Verfahren zur Herstellung eines flexiblen Rohrs (10; 70) zum Transport von Kryogen-Fluid gemäß irgendeinem der vorhergehenden Ansprüche, aufweisend die nachfolgenden Schritte:
- Bereitstellung eines inneren, gewellten Rohrs (16) mit einer Achse (A-A'), das eine Mehrzahl von Wellen (30) definiert, die radial zur Achse (A-A') hin ausmünden,
- Anordnen wenigstens einer Zugverstärkungsschicht (18) um das gewellte Rohr (16),
- Platzieren wenigstens einer thermischen Isolationsschicht (44, 46) um die Verstärkungsschicht (18),
wobei das Verfahren aufweist einen Schritt des Anordnens einer inneren Hülle (14) zur Führung der Strömung des Kryogen-Fluids in dem gewellten Rohr (16), wobei die innere Hülle (14) ausgehend von einer Mehrzahl von zylindrischen Segmenten (50) gebildet ist,
wobei jedes zylindrische Segment (50) der inneren Hülle (14) eine Mehrzahl von sukzessiven Wellen (30) des gewellten Rohrs (16) abdeckt und aufweist einen äußeren, axialen Festhalte-Anschlag (54), der in einer Welle (30) des gewellten Rohrs (16) aufgenommen ist,
wobei jedes zylindrische Segment (50) axial verlagerbar ist bezüglich des gewellten Rohrs (16) über einen gegebenen axialen Weg, der kleiner ist als die Teilungen der Wellen (30) des inneren, gewellten Rohrs (16), wobei der Weg definiert ist von dem axialen Weg des Festhalte-Anschlags (54) in einem Hohlraum einer Welle (30).

## Claims

1. A flexible pipe (10; 70) for conveying a cryogenic fluid including:
- an inner corrugated tube (16) having an axis (A-A'), defining a plurality of corrugations (30) opening radially towards the axis (A-A');
- at least one tensile armor layer (18), arranged around the corrugated tube (16);
- and at least one thermal insulation layer (44, 46), arranged around the armor layer (18);
in which the pipe (10) comprises an inner sheath (14) for guiding the flow of cryogenic fluid arranged in the corrugated tube (16),
**characterized in that** the inner sheath (14) is made up of a plurality of cylindrical segments (50),
each cylindrical segment (50) of the inner sheath (14) covering a plurality of successive corrugations (30) of the corrugated tube (16) and including an outer abutment (54) for axial wedging received in a corrugation (30) of the corrugated tube (16),
and **in that** each cylindrical segment (50) can be moved relative to the corrugated tube (16) over a given axial travel smaller than the pitch of the corrugations (30) of the corrugated inner tube (16), the travel being defined by the axial travel of the wedging abutment (54) in a hollow of a corrugation (30).

2. The flexible tube (10) according to claim 1, **characterized in that** each cylindrical segment (50) defines an inner cylindrical surface (62) with no asperities spaced axially away from the outer abutment (54).

3. The flexible tube (10; 70) according to one of claims 1 or 2, **characterized in that** each cylindrical segment (50) has a downstream edge (60) engaged through an upstream edge (58) of an adjacent cylindrical segment (50A).

4. The flexible tube (10; 70) according to any one of the preceding claims,
**characterized in that** each outer abutment (54) extends angularly over an angle larger than 90°, advantageously larger than 180° around the axis (A-A').

5. The flexible tube (10; 70) according to any one of the preceding claims,
**characterized in that** each cylindrical segment (50) comprises a cylindrical body (52) made in a single piece with the outer abutment (54), the outer abutment (54) being formed through local deformation of the cylindrical body (52).

6. The flexible tube (10; 70) according to any one of the preceding claims,
**characterized in that** the outer abutment (54) of each cylindrical segment (50) extends axially across from a portion of an adjacent cylindrical segment (50A).

7. The flexible tube (10; 70) according to any one of the preceding claims,
**characterized in that** the outer surface of each outer abutment (54) is covered by a plastic sheath (69) designed to come into contact with the corrugated tube (16).

8. The flexible tube (10; 70) according to any one of the preceding claims,
**characterized in that** each cylindrical segment (50) is elastically deformable toward the axis (A-A') between a radially expanded idle configuration and a radially contracted configuration, each cylindrical segment (50) occupying its radially contracted configuration when it is inserted into the corrugated tube (16).

9. The flexible tube (10; 70) according to any one of the preceding claims,
**characterized in that** each cylindrical segment (50) has a slit along a generatrix over its entire length.

10. The flexible tube (10; 70) according to any one of the preceding claims,
**characterized in that** the pipe comprises a spiral layer (19) for maintaining the tensile armor layer (18), the spiral layer (19) being inserted between the armor layer (18) and the thermal insulation layer (44, 46).

11. A method for manufacturing a flexible pipe (10; 70) for conveying a cryogenic fluid according to any of the preceding claims, comprising the following steps:
- providing a corrugated inner tube (16) with an axis (A-A') defining a plurality of corrugations (30) opening radially towards the axis (A-A');
- arranging at least one tensile armor layer (18) around the corrugated tube (16);
- placing at least one thermal insulation layer (44, 46) around the armor layer (18);
the method comprising a step for arranging an inner sheath (14) for guiding the flow of cryogenic fluid in the corrugated tube (16), the inner sheath (14) being made up of a plurality of cylindrical segments (50),
each cylindrical segment (50) of the inner sheath (14) covering a plurality of successive corrugations (30) of the corrugated tube (16) and including an outer abutment (54) for axial wedging received in a corrugation (30) of the corrugated tube (16), each cylindrical segment (50) being able to move relative to the corrugated tube (16) over a given axial travel smaller than the pitch of the corrugations (30) of the corrugated inner tube (16), the travel being defined by the axial travel of the wedging abutment (54) in a hollow of a corrugation (30).
